(19) Europäisches Patentamt / European Patent Office / Office européen des brevets

(11) **EP 2 999 718 B1**

(12) **EUROPEAN PATENT SPECIFICATION**

(45) Date of publication and mention
of the grant of the patent:
**31.01.2018 Bulletin 2018/05**

(51) Int Cl.:
**C08B 30/14** (2006.01)     **C09D 103/00** (2006.01)
**C08L 3/00** (2006.01)

(21) Application number: **14732725.8**

(22) Date of filing: **21.05.2014**

(86) International application number:
**PCT/US2014/038889**

(87) International publication number:
**WO 2014/189999 (27.11.2014 Gazette 2014/48)**

(54) **AQUEOUS COMPOSITION**

WÄSSRIGE ZUSAMMENSETZUNG

COMPOSITION AQUEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2013 EP 13002643**

(43) Date of publication of application:
**30.03.2016 Bulletin 2016/13**

(73) Proprietor: **Cargill, Incorporated
Wayzata, MN 55391 (US)**

(72) Inventors:
• **MAKARAINEN, Timo
02610 Espoo (FI)**

• **SIVASLIGIL, Dogan Sahin
3090 Overijse (BE)**
• **VOIGT, Andreas
45468 Mulheim (DE)**

(74) Representative: **Dottridge, Cass A.C.
Cargill R&D Centre Europe BVBA
Bedrijvenlaan 9
2800 Mechelen (BE)**

(56) References cited:
**EP-A1- 1 514 891      WO-A1-2010/113332
WO-A2-01/91721      WO-A2-01/92400
WO-A2-01/92401**

EP 2 999 718 B1

**Description**

CROSS-REFERENCE TO RELATED APPLICATIONS

This application claims the benefit of European Application Serial No. 13002643.8 filed 21 May 2013, the disclosure of which is incorporated herein by reference.

FIELD OF THE INVENTION

The present invention relates to aqueous starch compositions. In particular, it relates to stable, high dry solids, viscosity-reduced aqueous starch compositions and to their use, for example, in the production of coating compositions.

BACKGROUND OF THE INVENTION

Starch is used in several different aspects of the paper-making process including, for example, internal sizing, surface sizing and coating. In each of these applications, it plays a variety of important roles such as binding agent, thickener, rheology modifier, and strengthening agent. Typically, starch may be provided either in a dry, powder form or in the form of an aqueous composition.

Providing starch in the form of an aqueous composition presents a number of advantages. In particular, aqueous compositions are easier and safer to handle than powders, require less preparation time (they do not require cooking at the customer side), and are easier to mix with other ingredients. Aqueous compositions of starch will either be in the form of dispersions or solutions. If starch granules are simply dispersed in water, the resulting compositions will not be stable as the granules will sediment over time. If, on the other hand, starch is solubilized - even at only moderate concentrations - the resulting composition will become highly viscous and gel-like. This makes handing and use challenging as the composition will no longer be easy to pump, and will be difficult to mix with other ingredients.

To overcome the issue of viscosity, it has been suggested to use thinned starches (i.e. starches with reduced molecular weights obtained, e.g. through acid hydrolysis). However, for certain applications, it is important to maintain a high starch chain length and molecular weight. As such, the only effective way of providing aqueous starch compositions has been in the form of very low concentration solutions (i.e. in the order of 5% solutions or less). This in turn is problematic as it leads to excessive water use, higher packaging, transport and storage costs, and more energy use (e.g. for drying).

WO03/080929 (National Starch) discloses liquid starch dispersions for paper coating. The dispersions rely on the use of cationic waxy starches combined with alkyl or alkenyl succinic anhydride modified starches and are, as such, complicated and expensive to produce.

EP1514891 (Roquette) discloses aqueous dispersions of biodegradable polymers. The biodegradable polymers are heavily chemically modified, hydrophobic products which are therefore incapable of solubilisation and difficult to disperse. As such, the polymers are blended with an internal plasticizer, such as modified glycerol, and then blended with water under high shear. Again, the process is expensive and complicated and doesn't address the production of high dry solid starch compositions.

WO2010/133324 (Cargill) discloses anionic cellulose dispersions wherein hydrocolloids and an acidic pH are used to stabilize the composition and control viscosity. The dispersions are intended to be used as rheology modifiers, e.g. in the production of adhesive compositions. They could not be used in the production of coating compositions as their low pH would be incompatible with coating pigments (such as calcium carbonate). What's more, although these compositions allowed a far higher dry substance content than previously achieved, the final dry substance content would still be relatively low for a coating composition.

There is therefore a clear need in the art for an alternative type of aqueous composition which would enable higher starch concentrations whilst maintaining a reasonable viscosity and stability and which would not require cooking before use. The present invention provides such a composition.

STATEMENTS OF THE INVENTION

According to a first aspect of the present invention, there is provided an aqueous composition comprising an aqueous phase and a cold water soluble starch material, characterized in that the aqueous phase comprises at least a viscosity inhibitor and a hydrocolloid; and in that the starch material is dispersed throughout the aqueous phase.

According to another aspect of the present invention, there is provided a method for the production of such an aqueous composition, characterized in that it comprises mixing a viscosity inhibitor, a hydrocolloid, and a cold water soluble starch material with water.

According to yet another aspect of the present invention, there is provided a binder composition comprising such an aqueous composition and, optionally, one or more synthetic binders.

According to a further aspect of the present invention, there is provided a paper coating composition, characterized in that it comprises such an aqueous composition or binder, together with one or more pigments.

According to a further aspect of the present invention, there is provided a paper product, characterized in that it is coated with such a coating composition.

FIGURES

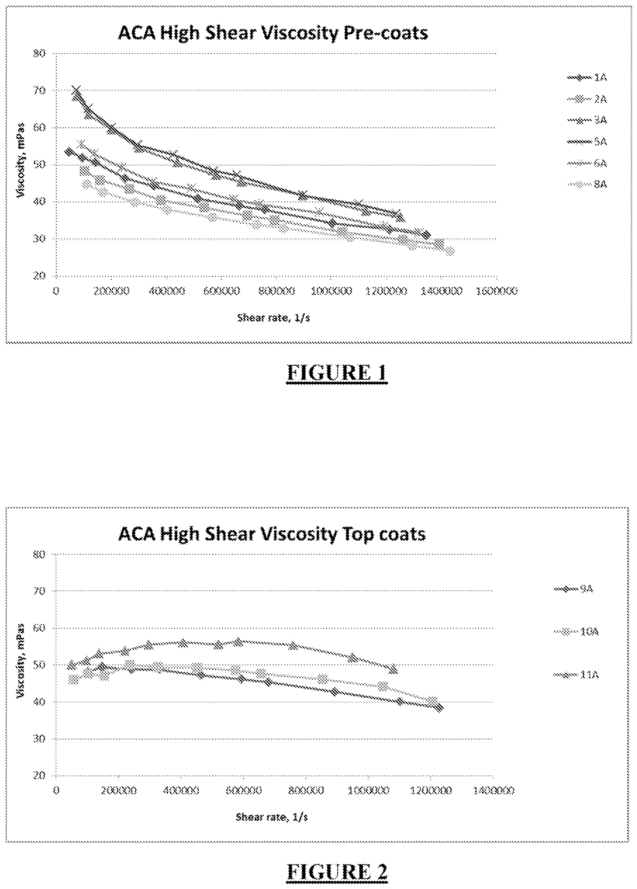

**Figure 1** shows the ACA high shear viscosity of pre-coat coating compositions produced according to Example 2, wherein 1A represents data for pre-coat 1 (PC1 in Table 2), 2A represents data for PC2, 3A represents data for PC3, 5A represents data for PC5, 6A represents data for PC6, 8A represents data for PC8 (data was not recorded for PC4 or PC7 as they are the same compositions as PC3 and PC6, respectively).

**Figure 2** shows the ACA high shear viscosity of top-coat coating compositions produced according to Example 2, wherein 9A represents data for top-coat 4 (TC4 in Table 3), 10A represents data for TC7, and 11A represents data for TC1.

DETAILED DESCRIPTION OF THE INVENTION

Unless specified otherwise, the term "dry substance" as used herein will refer to the non-volatile components of a composition. Thus, for example, stating that a composition "comprises 40% by weight dry substance" will be understood to mean that it comprises 40% non-volatile compounds, in practice, this will usually mean that the composition comprises 60% water. Similarly, stating that the composition comprises 10% of a substance by weight "on a dry weight basis" will mean that, of all the non-volatilc components, 10% by weight will consist of the substance in question.

The present invention provides an aqueous composition comprising an aqueous phase and a cold water soluble starch material, characterized in that: the aqueous phase comprises at least a viscosity inhibitor and a hydrocolloid; and in that the starch material is dispersed throughout the aqueous phase. Unless otherwise made clear by context, the term "a" as used herein will mean "at least one".

AQUEOUS COMPOSITION

The term "aqueous composition" as used herein refers to a water-based composition. In particular, it refers to a dispersion or a suspension of matter (in this case a dispersion or suspension of at least a starch material) in an aqueous phase. The composition will preferably be homogeneous and stable under normal storage conditions (e.g. at atmospheric pressure and room temperature) - that is, it will not be subject to any notable sedimentation or separation, and it will not exhibit any detrimental changes in viscosity (i.e. the viscosity will remain within a preferred range as defined below). Preferably, the composition will remain stable for at least 24 hours, more preferably for at least 48 hours, more preferably at least 3 days, more preferably at least a week, more preferably for at least a month.

The composition will preferably have a high dry solids content, i.e. it will preferably comprise at least 40% dry substance by weight. More preferably, it will comprise at least 50%, more preferably at least 60% dry substance by weight. For example, the composition may comprise 40-70% dry substance by weight. Advantageously, despite this high dry substance, the composition of the present invention will remain fluid. It will have a viscosity which will make it suitable for use, for instance, in the preparation of sizing compositions and/or coating colors. In particular, it will remain easy to pump and to mix with other ingredients. Preferably, it will have a Brookfield viscosity of less than 3000 mPas. Brookfield viscosity is measured with a Brookfield DV-II+ viscometer according to the manufacturer's instructions, at 20°C, 100 rpm, and with a no. 4 spindle. More preferably, it will have a Brookfield viscosity of 500-3000 mPas, more preferably of 600-2000 mPas, more preferably of 700-1000 mPas.

The term "aqueous phase" as used herein refers to the portion of the aqueous composition consisting of water together with any solid or liquid ingredients which are dissolved or which form a colloidal dispersion therein. In particular, the aqueous phase of the composition of the present invention will comprise at least a viscosity inhibitor and a hydrocolloid.

VISCOSITY INHIBITOR

A viscosity inhibitor is any compound which, when used in accordance with the present invention, is capable of lowering the viscosity of the final aqueous composition compared to an otherwise equivalent composition in the absence of the viscosity inhibitor (thus a composition of the present invention will be considered to have a reduced viscosity compared to its viscosity inhibitor-free equivalent). Explained in another way, a viscosity inhibitor will be capable of preventing or limiting the swelling and/or solubilisation of the starch material in the aqueous phase. The viscosity inhibitor may also act as a binder and/or a plasticizer. It will advantageously be water soluble and, more advantageously, cold water soluble. It will preferably be selected from the group consisting of carbohydrates, polyols, synthetic polymers and/or oligomers, and mixtures of two or more thereof.

Carbohydrates suitable for use as viscosity inhibitors will preferably have a DE of 10 to 100, more preferably of 10 to 50, more preferably of 20 to 40. Advantageously, they will be selected from mono-, di-, tri- or tetrasaccharides, mixtures thereof and/or syrups thereof. For example, the viscosity inhibitor may be a monosaccharide such as glucose, a glucose syrup, sucrose, or other sugars, maltodextrin, or a starch hydrolysate. Preferably, it will comprise or consist of glucose or a glucose syrup.

A polyol is an alcohol containing multiple hydroxyl groups. Examples of polyols suitable for use as viscosity inhibitors include glycol, glycerol, sorbitol, and mixtures thereof. Preferably, the viscosity inhibitor will comprise or consist of glycerol. More preferably, it will comprise or consist of both glucose, or glucose syrup, and glycerol.

Synthetic polymers and/or oligomers suitable for use as viscosity inhibitors may include, for example, polyethers and polyesters. Preferably, the viscosity inhibitor will comprise or consist of polyethylene glycol (PEG).

The viscosity inhibitor will preferably be present in the composition of the present invention in an amount of 10-90%, more preferably 20-80%, more preferably 30-70%, more preferably 50-60% by weight, based on total dry substance. In any event, in addition to the viscosity inhibitor, the aqueous phase will also comprise one or more hydrocolloids.

HYDROCOLLOID

A hydrocolloid is any compound, typically a hydrophilic polymer, capable of forming a colloidal dispersion in water. Examples of suitable hydrocolloids include, by way of example, xanthan gum, gellan gum, guar gum, gum arabic, locust bean gum, agar, carrageenan and pectin. Preferably, the hydrocolloid used in accordance with the present invention will be a gum. More preferably, it will be a xanthan gum. The composition of the present invention will preferably comprise no more than 1% hydrocolloid by weight, on a dry weight basis. More preferably, it will comprise 0.01-1%, more preferably 0.05-1%, more preferably 0.1-1%, more preferably 0.1-0.5% hydrocolloid by weight.

Without wishing to be bound by theory, it is believed that while the viscosity inhibitor prevents or reduces swelling and/or solubilisation of the starch material, the hydrocolloid(s) impart a certain viscosity to the aqueous phase of the composition of the invention. This, in turn, allows for the starch material, once dispersed (suspended), to remain in dispersion i.e. by preventing sedimentation.

STARCH

The term "cold water soluble starch material" as used herein refers to any starch material that is capable of fully or partially swelling or solubilising in water at ambient temperature (i.e. at 20°C). Preferably, the starch material will have a solubility, at pH 7 and at 20°C, of at least 30% (meaning that at least 30% of the starch material by weight will swell and/or solubilise), more preferably of at least 50%, more preferably of at least 70%, more preferably of at least 80%, more preferably at least 90%, more preferably at least 95% by weight - where solubility is determined according to METHOD 1. The starch material may be any cold water soluble native starch, starch derivative, or mixture thereof. Starch derivatives include, for example, chemically modified, thermally modified and enzymatically modified starches. They also include depolymerized starch molecules such as dextrins, maltodextrins and pyrodextrins. The starch material may be from any source including, for instance, waxy or dent corn, wheat, tapioca, potato or waxy potato, rice, barley or pea. Advantageously, the starch material will be selected from the group consisting of thinned starches, thermally modified starches, dextrins and mixtures of two or more thereof. The starch material may be subjected to more than one form of modification. Thus, for instance, it may further be esterified, etherified (e.g. hydroxypropylated), or acetylated. Suitable examples of starch materials suitable for use in the present invention could therefore include esterified, etherified, or acetylated thinned starches, esterified, etherified, or acetylated thermally modified starches, and esterified, etherified, or acetylated dextrins.

The composition of the present invention will ideally comprise at least 10% of the starch material by weight, based on total dry weight. More preferably, it will comprise 10-70%, more preferably, more preferably 20-60%, more preferably 30-50% of the starch material by weight.

Advantageously, the aqueous composition of the present invention will comprise an aqueous phase comprising at least glycerol, glucose syrup and xanthan gum; with a cold water soluble starch (such as a C*iCoat starch available from Cargill, Incorporated) dispersed throughout. Preferably, the composition will comprise approximately 50% dry substance by weight. It will advantageously comprise approximately 40-45% of the cold water soluble starch, 40-45% of the glucose syrup, 15-20% glycerol, and 0.1-0.2% xanthan gum, by weight on a dry weight basis.

Alternatively, the aqueous composition may comprise an aqueous phase comprising at least glycerol and xanthan gum; with a cold water soluble starch (such as a C*iCoat starch available from Cargill, Incorporated) dispersed throughout. Preferably, the composition will comprise approximately 50% dry substance by weight. It will preferably comprise approximately 40-45% of the cold water soluble starch, 40-45% maltodextrin, 15-20% glycerol, and 0.1-0.2% xanthan gum, by weight on a dry weight basis.

Thus, the composition of the present invention provides a stable, high-starch content aqueous composition which has a reduced viscosity at ambient temperature and atmospheric pressure. A method of producing such a composition is also part of the present invention.

METHOD OF MANUFACTURE

The present invention provides a method of making a high dry solids, reduced viscosity, aqueous composition comprising the steps of: mixing a viscosity inhibitor, a cold water soluble starch material, and a hydrocolloid with water.

All of the ingredients may be added simultaneously or substantially simultaneously to the water, e.g. in a continuous mixing apparatus. Preferably, however, the viscosity inhibitor will be added to the water before addition of the starch material. If necessary (i.e. if it is not soluble at ambient temperature), the viscosity inhibitor may be solubilized, e.g. by heating, prior to use or prior to the addition of the starch material. The hydrocolloid may be added before the starch material. Preferably, however, it will be added at the same time as the starch material or after it. More preferably, the hydrocolloid will be added after the starch material. If the starch material is added after the hydrocolloid, it will preferably be added before the hydrocolloid has developed its full viscosity. More preferably, it will be added no more than 10 minutes after the hydrocolloid.

Thus, according to one possible aspect, the method of the present invention will include the steps of: (a) dissolving a viscosity inhibitor in water to produce an aqueous phase; (b) dispersing a cold water soluble starch material throughout said aqueous phase; and (c) adding a hydrocolloid to said dispersion (all terms as defined above). The starch material will preferably be dispersed throughout the aqueous phase through simple mixing or under turbulence sufficient to avoid the formation of lumps.

Additional ingredients, such as biocides, if used, can be added at any stage, irrespective of the method of production. For example, they may be added simultaneously with one or more of the main ingredients (i.e. the starch material, hydrocolloid and viscosity inhibitor), they may be added to the water prior to the addition of any of the main ingredients or they may be added after the addition of the main ingredients. If the main ingredients are added in a stepwise fashion, they may also be added in one or more intermediate steps.

After addition of the dry ingredients, the aqueous composition of the invention may be ready for use. Alternatively, the method of the present invention may include a further, dilution step in which additional water is introduced into the composition prior to use. This further step may occur at any stage, e.g. after addition of the viscosity inhibitor, starch material and/or hydrocolloid. Surprisingly, it has been found that, of two compositions with equal water contents, the one obtained by dilution has a lower viscosity than the one obtained without. For example, a composition obtained by adding the starch material, hydrocolloid and viscosity inhibitor to 60% dry solids and which is then diluted down to 50% dry solids will have a lower viscosity than a composition obtained by simply adding the starch material, hydrocolloid and viscosity inhibitor to 50% dry solids.

APPLICATIONS

The aqueous composition of the present invention may advantageously be used in a number of applications, including in various compositions for use in the paper-making process. In particular, the present invention provides a binder composition comprising an aqueous composition as described above. Such a binder composition may also comprise one or more synthetic binders. Synthetic binders are well known in the art and a skilled person will be able to determine those most suited for use according to the present invention. By way of illustration only, examples of synthetic binders that could be used include styrene butadiene, styrene acrylate, vinyl polymer based latexes, and polyvinyl alcohol.

The binder composition of the present invention may be used as a binder in a variety of applications. For instance, it may be used in internal sizing compositions, surface sizing compositions and coating compositions. Preferably, there will be provided a coating composition comprising the above binder composition.

COATING COMPOSITION

Coating compositions are typically used to enhance the feel, appearance and/or functionality of a substrate. Preferably, the coating composition of the present invention will be a paper coating composition (also known as "coating color"). It will advantageously comprise at least 50% dry substance by weight, more preferably 50-80%.

In addition to a binder composition as defined above, coating compositions of the present invention will also comprise one or more pigments. Examples of suitable pigments include clays such as structured and calcined clays, hydrated aluminum silicates (such as kaolin clay), bentonite, natural and synthetic calcium carbonate, calcium sulphate (gypsum), silicas, precipitated silicas, titanium dioxide, alumina, aluminium trihydrate, plastic (polystyrene) pigments, satin white, talc, barium sulphate, zinc oxide and mixtures of two or more thereof. The appropriate pigment will readily be selected by a skilled person depending on the type of coating composition being produced.

The coating composition will preferably comprise 1-20 parts binder composition to 100 parts pigment, more preferably 1-20 parts per 100 parts pigment (expressed on a dry weight basis). It will ideally have a Brookfield viscosity of 200-3000 mPas. Brookfield viscosity is measured with a Brookfield DV-II+ viscometer according to the manufacturer's instructions, at 20°C, 100 rpm, and with a no. 4 spindle.

The coating composition may also comprise one or more additives. Examples of possible additives, if used, may include: thickeners (such as cellulose ethers, alginates, native or modified starches, and synthetic polymers), surfactants (such as cationic surfactants, anionic surfactants, non-ionic surfactants, amphoteric surfactants and fluorinated surfactants), hardeners (such as active halogen compounds, vinylsulfone compounds and epoxy compounds), dispersing agents (such as polyacrylates, polyphosphates, and polycarboxylates), flowability improvers, lubricants (such as calcium, ammonium and zinc stearate, wax or wax emulsions, alkyl ketene dimer, and glycols), antifoamers (such as octyl alcohol and silicone-based antifoamers), releasing agents, foaming agents, penetrants, optical brighteners (such as fluorescent whiteners), preservatives (such as benzisothiazolone and isothiazolone compounds), biocides (such as metaborate, thiocyanate, and sodium benzoate), yellowing inhibitors (such as sodium hydroxymethyl sulfonate, and sodium p-toluenesulfonate), ultraviolet absorbers (such as benzotriazole compounds having a hydroxy-dialkylphenyl group at the 2 position), antioxidants (such as sterically hindered phenol compounds), insolubilisers, antistatic agents, pH regulators (such as sodium hydroxide, sulfuric acid and hydrochloric acid), water-resisting agents (such as ketone resin, anionic latex, and glyoxal), wet and/or dry strengthening agents (such as glyoxal based resins, oxidised polyethylenes, melamine resins, urea formaldehyde), cross-linking agents, gloss-ink holdout additives, grease and oil resistance additives, leveling and evening aids (such as polyethylene emulsions, and alcohol/ethylene oxide), and mixtures of two or more thereof. The amount of each of these compounds to be added, if at all, will be determined in accordance with standard practice and with the desired properties of the particular coating composition being produced.

Coating of paper products can be carried out on the sheet-forming machine or on a separate coating machine. Methods of applying coating compositions to paper products are well known in the art. They include, for example, air knife coating, rod coating, bar coating, wire bar coating, spray coating, brush coating, cast coating, flexible blade coating, gravure coating, jet applicator coating, short dwell coating, slide hopper coating, curtain coating, flexographic coating, size-press coating, reverse roll coating and transfer roll coating (metered size press or gate roll coating). After the coating composition has been applied, any excess is preferably removed. The paper is then dried and optionally calendered to improve surface smoothness and gloss and to reduce bulk. Thus, the present invention also provides paper products produced with an aqueous composition as defined above, and methods of manufacturing them.

Surprisingly, it has been found that coating compositions of the present invention have lower high shear viscosities compared to equivalent coating compositions made with starch alone (instead of the present aqueous compositions of starch), making them easier to handle and to apply. Unexpectedly, they have also been found to contribute to improved gloss and brightness (again compared to equivalent starch-only coating compositions).

The present invention will now be described in more detail by way of the following non-limiting examples.

EXAMPLES

Example 1

Compositions were prepared with the ingredients as shown in Table 1. Each ingredient was carefully measured before being added to the composition.

Step 1: The required amount of water was added to a plastic beaker. Glycerol and glucose syrup were then added to the water and the composition was agitated with a mechanical, 4-bladed stirrer for 5 minutes at a speed sufficient to produce a good vortex.

Step 2: The starch material was slowly added to the aqueous composition of step 1, and stirred as above, for 5 minutes.

Step 3: The xanthan gum was added to the aqueous composition of step 2, together with the biocide. The resulting composition was stirred, as above, but for 15 minutes. Viscosity measurements were made at t= 1 hour, 24 hours, 2 weeks and 6 weeks. Brookfield viscosity was measured according to METHOD 5.

The results are presented in Table 1.

| Table 1 | Sample 1 | Sample 2 (comparative) | Sample 3 (comparative) | Sample 4 |
|---|---|---|---|---|
| amounts in % dry substance | | | | |

(continued)

| Table 1 | Sample 1 | Sample 2 (comparative) | Sample 3 (comparative) | Sample 4 |
|---|---|---|---|---|
| Water | 49.9 | 79.2 | 50 | 49.9 |
| Glycerol | 8.3 | - | 8.3 | 8.3 |
| Glucose syrup (C*Sweet 01403 from Cargill - with a DE of 26-32) | 20.8 | - | 20.8 | - |
| Maltodextrin (C*Dry MD 01915 from Cargill - with a DE of 16-20) | - | - | - | 20.8 |
| Starch material (C*iCoat 07520 from Cargill) | 20.8 | 20.8 | 20.8 | 20.8 |
| Xanthan gum (Satiaxane CX 2 QD) | 0.07 | - | - | 0.07 |
| Biocide (Parmetol A28S) | 0.2 | 0.2 | 0.2 | 0.2 |
| Total dry solids (%) | 50 | 20.8 | 50 | 50 |
| Brookfield Viscosity measurements | | | | |
| T = 1h | 660 | 168.4 | 144 | 1130 |
| T = 24h | 800 | 304.4 | 155* | 1334 |
| T = 2 weeks | 970 | 512 | 162* | 1622 |
| T = 6 weeks | 952 | 544 | 162* | 1516 |
| * with phase separation | | | | |

As can be seen in these examples, despite having a high dry solids content (i.e. 50%), the samples of the invention (Samples 1 and 4) still had acceptable viscosity levels, even after 6 weeks. The high dry solids were advantageous as they allowed the compositions to act as effective binders. By contrast, Sample 2 (which comprised neither viscosity inhibitor nor hydrocolloid) had a low dry solid content (just 20%). Increasing starch content to achieve a similar dry solid content as for Samples 1 and 4, results in the composition becoming so viscous it is unmanageable.

Increasing dry solids with viscosity inhibitors alone (i.e. without hydrocolloids - see Sample 3) would not achieve the same binding power due to the low molecular weight of e.g. glucose syrup. What's more, without hydrocolloids, phase separation (starch sedimentation) was observed.

Example 2

Pre-coat compositions were prepared with the ingredients shown in Table 2. Each ingredient was carefully measured before being added to the composition. In a first step, the calcium carbonate components were added to a beaker together with the dispersing agent. If being used, the cold water soluble starch or binder composition of the invention (Sample 1 from Example 1, above) was then added. The mixture is then stirred, at high speed, for 20 minutes. Stirring speed was then reduced to prevent excess air from being incorporated into the mixture. The latex was then added, followed by any remaining ingredients, with continuous stirring. After approximately 5 minutes of mixing, water was added to reach a dry solids content of 65-67% by weight (actual dry solid content is indicated in Table 2). If necessary, the pH was also adjusted to approximately pH 9.

| Table 2 | PC1 (comp.) | PC2 (comp.) | PC3 (comp.) | PC4 (comp.) | PC5 (comp.) | PC6 | PC7 | PC8 |
|---|---|---|---|---|---|---|---|---|
| Ingredients (in g) | | | | | | | | |
| Ground CC* (HC60) | 88 | 88 | 88 | 88 | 88 | 88 | 88 | 88 |
| Precipitated CC* (Opacarb 3000) | 12 | 12 | 12 | 12 | 12 | 12 | 12 | 12 |

(continued)

| Table 2 | PC1 (comp.) | PC2 (comp.) | PC3 (comp.) | PC4 (comp.) | PC5 (comp.) | PC6 | PC7 | PC8 |
|---|---|---|---|---|---|---|---|---|
| Dispersing agent (Fennodispo A41) | 0.15 | 0.15 | 0.15 | 0.15 | 0.15 | 0.15 | 0.15 | 0.15 |
| SB latex (Litex PX9340) | 12.2 | 9.5 | 6 | 6 | 4 | 6 | 6 | 4 |
| Sample 1 | | | | | | 6.5 | 6.5 | 8.5 |
| Cold water soluble starch (C*iCoat 07520) | | | 6.5 | 6.5 | 8.5 | | | |
| CMC (Finnfix-30) | 0.7 | 0.7 | 0.35 | 0.35 | - 0.3 | 0.55 | 0.55 | 0.5 |
| NaOH | 0.12 | 0.12 | 0.12 | 0.12 | 0.12 | 0.12 | 0.12 | 0.12 |
| synthetic rheology modifier (Sterocoll FS) | 0.15 | 0.1 | | | | | | |
| Analysis | | | | | | | | |
| solids [%] | 65 | 64.8 | 66.4 | 66.4 | 65.1 | 66.6 | 66.6 | 65.1 |
| pH | 9.3 | 9.4 | 9.3 | 9.3 | 9.1 | 9.1 | 9.1 | 9.1 |
| Brookfield Vise. 100rpm [mPa.s]** | 1770 | 1550 | 1230 | 1230 | 910 | 1090 | 1090 | 680 |
| WRV [g/m$^2$]** | 92.3 | 104 | 57.1 | 57.1 | 42.8 | 104.4 | 104.4 | 112.1 |
| blade pressure [bar] | 1.59 | 1.9 | 1.9 | 1.7 | 1.85 | 1.99 | 2.11 | 2.2 |
| drying temp. [°C] | 80 | 80 | 80 | 80 | 80 | 80 | 80 | 80 |
| *CC = calcium carbonate // **Methods provided below (METHODS 5 (viscosity) and 3 (WRV)) | | | | | | | | |

The ACA high-shear viscosity (or ACAV Capillary Viscosity) was measured, according to METHOD 2, for each of pre-coats 1-3,5,6 and 8. The results are shown in Figure 1.

Top-coat compositions were prepared following the methodology used for the pre-coat compositions (described above), but with the ingredients shown in Table 3.

| Table 3 | TC1 (comp.) | TC2 (comp.) | TC3 (comp.) | TC4 (comp. ) | TC5 (comp.) | TC6 (comp.) | TC7 | TC8 (comp.) |
|---|---|---|---|---|---|---|---|---|
| Ingredients | | | | | | | | |
| Fine ground CC (HC90) | 43 | 43 | 43 | 43 | 43 | 43 | 43 | 43 |
| Opacarb 3000 | 33 | 33 | 33 | 33 | 33 | 33 | 33 | 33 |
| HG90 | 24 | 24 | 24 | 24 | 24 | 24 | 24 | 24 |
| Latex (Basonal 1600) | 13 | 13 | 13 | 10 | 13 | 13 | 10 | 13 |
| Sample 1 | | | | | | | 3 | |
| C*iCoat 07520 | | | | 3 | | | | |
| PVA (Mowiol 6-98) | 0.7 | 0.7 | 0.7 | 0.55 | 0.7 | 0.7 | 0.55 | 0.7 |

(continued)

| Table 3 | TC1 (comp.) | TC2 (comp.) | TC3 (comp.) | TC4 (comp. ) | TC5 (comp.) | TC6 (comp.) | TC7 | TC8 (comp.) |
|---|---|---|---|---|---|---|---|---|
| Fennodispo A41 | 0.15 | 0.15 | 0.15 | 0.15 | 0.15 | 0.15 | 0.15 | 0.15 |
| Finnfix-30 | 0.4 | 0.4 | 0.4 | 0.4 | 0.4 | 0.4 | 0.4 | 0.4 |
| Optical Brightener (Blancophor P) | 0.6 | 0.6 | 0.6 | 0.6 | 0.6 | 0.6 | 0.6 | 0.6 |
| NaOH | 0.075 | 0.075 | 0.075 | 0.075 | 0.075 | 0.075 | 0.07 5 | 0.075 |
| Analysis | | | | | | | | |
| solids [%] | 64.9 | 64.9 | 64.9 | 64.9 | 64.9 | 64.9 | 64.6 | 64.9 |
| pH | 8.9 | 8.9 | 8.9 | 9.1 | 8.9 | 8.9 | 9.1 | 8.9 |
| Brookf. Vise. 100rpm [mPa.s] | 1130 | 1130 | 1130 | 1190 | 1130 | 1130 | 980 | 1130 |
| WRV [g/m$^2$] | 118.1 | 118.1 | 118.1 | 81.3 | 118.1 | 118.1 | 112. 2 | 118.1 |
| blade pressure [bar] | 2.00 | 2 | 2 | 1.85 | 2 | 2 | 2.06 | 2 |
| drying temp. [°C] | 170 | 170 | 150 | 100 | 170 | 160 | 100 | 160 |

The ACA high-shear viscosity was measured, according to METHOD 2, for each of top-coats 1,4 and 7. The results are shown in Figure 2.

These pre- and top-coat compositions were coated onto paper under the following conditions (Table 4), in each case with the corresponding pre- and top-coats being combined (i.e. PC1 with TC1, PC2 with TC2 and so on).

| Table 4 | | |
|---|---|---|
| Base board (g/m2) | | 230 |
| Coat weight (g/m2) | Pre-coat | 10 |
| | Top-coat | 11 |
| Speed (m/min) | | 600 |
| Moisture (%) | | 7.1 |
| Calendering | | on-line, nip load 20-30kN/m, no heating |
| Blade thickness (mm) | | 0.375 |
| Blade pressure and drying temperature | | As indicated in tables 2 and 3 above. |

The resulting double-coated papers were then assessed for gloss (Gloss Gardener 75°), using standard method DIN 67530. The results of this assessment are presented in Table 5.

| Table 5 | PC1 + TC1 | PC2 + TC2 | PC3 + TC3 | PC4 + TC4 | PC5 + TC5 | PC6 + TC6 | PC7 + TC7 | PC8 + TC8 |
|---|---|---|---|---|---|---|---|---|
| Grammage [g/m$^2$] | 255 | 255 | 250 | 252 | 259 | 253 | 254 | 254 |
| Gloss Gardner 75° [%] (top side) | 46.7 | 46.4 | 49.1 | 44.5 | 49.7 | 46.4 | 47.3 | 50.0 |

Conclusions

In terms of handing and ease of application, coating compositions according to the present invention present very similar characteristics (e.g. ACA high shear viscosity) to traditional latex-based coating composition. In fact, they replicate the performance of these traditional latex compositions better than compositions in which latex has been partially replaced with starch only (even when that starch is the same as the one used in the compositions of the present invention, in this case a cold water soluble starch - Cargill Incorporated's C*iCoat 07520).

In terms of gloss, papers coated with at least one coating composition according to the present invention perform as well as, if not better than, papers coated with comparable latex-based compositions. They also perform as well as, if not better than, papers coated with compositions in which latex has been partially or fully replaced with starch only.

Methods

**Method 1 - Cold Water Solubility**

Determine the percent dry substance (DS) of a sample by drying 5g for 4 hours at 120°C under vacuum.

Weigh 2g of sample and transfer to a dry 200ml Kohlrausch flask. Partially fill with water at 25°C. Shake vigorously until completely in suspension and dilute to volume. Stopper flask and shake gently while submerged in a water bath at 25°C for a total agitation time of 1 hour.

Filter through a Whatman No. 2V paper, returning the first portion of filtrate. Measure 50ml of filtrate and transfer to a weighed evaporating dish.

Evaporate to dryness on a steam bath and dry in a vacuum oven for 1 hour at 100°C. Cool in a desiccator and weigh to the nearest mg.

$$DS, \% = 100 - [(loss\ in\ weight,\ g\ x\ 100)\ /\ (sample\ weight,\ g)]$$

$$Solubles, \% = (residue\ weight,\ g\ x\ 100)\ /\ [0.25\ x\ sample\ weight,\ g\ x\ (DS, \%\ /\ 100)]$$

**Method 2 - ACAV Capillary Viscosity**

Principle: the sample is forced through capillaries at high pressure, using a piston driven mechanism.

Apparatus: ACAV A2 Viscometer (capillary): capillary = 160$\mu$m (wire); slit = 50$\mu$m (wire).

Prior to measurement, samples were degassed and heated to 30°C.

Manufacturer's instructions are followed to measure viscosity at 350, 300, 260, 160, 120, 80, 50, and 20 bar.

**Method 3 - AA-GWR Water Release Test**

ÅA - GWR WRV-apparatus
Injection (10 mL)
Thermometer
Filter paper (blue ribbon)
Millipore filter (5 $\mu$m pore size)
Balance (sensibility: 0,001g)

Both control levers - "Pressure" and "Cylinder" - have to be in the "off" position (downwards). At least three filter papers should be weighed and the figure logged (weight 1). The filters have to be placed on the rubberized plate and the Millipore filter is then placed on the filter papers with the shiny side up. Then the cylinder is placed on the plate with the ceiling upward. The whole composition is put on the metal plate and risen up by switching the "Cylinder" lever. The sample is tempered to 30°C and 10 ml of the coating colour is filled into the cylinder with a syringe. The rubber should be free from coating colour to avoid leakage. The device has to be closed with the plug and the pressure is switched on with the "Pressure" lever and adjusted to 1 bar. At the same time the stop-watch is started. After two minutes, the pressure is stopped and the cylinder let down. The whole composition - plate, filters and cylinder - is removed and turned over a wash-basin and the filter paper is taken and weighed. This gives weight 2. Water release is calculated as follows: WRV [g/m2] = (weight 2 - weight 1) * 1250.

**Method 4** - **Gardner Paper Gloss 75°**

This test is performed according to DIN 67530.

**Method 5** - **Brookfield viscosity**

The sample is placed in a 600 ml glass beaker (wide design) and the temperature is adjusted to 20°C. Depending on the viscosity of the sample, a spindle is selected according to manufacturer's instructions and fixed carefully on a Brookfield Viscometer DV-II+ (for the sake of the present samples, a no. 4 spindle was generally considered appropriate). The glass beaker is then placed on the viscometer (set at 100 rpm), checking that the spindle is at least partially covered by the sample. Manufacturer's instructions are followed to measure the viscosity of the sample.

**Claims**

1. An aqueous composition comprising an aqueous phase and a cold water soluble starch material, **characterized in that** the aqueous phase comprises at least a viscosity inhibitor and a hydrocolloid; and **in that** the starch material is dispersed throughout the aqueous phase.

2. A composition according to claim 1, **characterized in that** the viscosity inhibitor is water soluble.

3. A composition according to claim 1 or claim 2, **characterized in that** the viscosity inhibitor is selected from carbohydrates having a DE of at least 10, polyols, synthetic polymers, synthetic oligomers and mixtures of two or more thereof.

4. A composition according to any one of the preceding claims, **characterized in that** the viscosity inhibitor comprises a carbohydrate selected from the group consisting of glucose, glucose syrups, starch hydrolysates, and mixtures of two or more thereof.

5. A composition according to any one of the preceding claims, **characterized in that** the viscosity inhibitor comprises glycerol.

6. A composition according to any one of the preceding claims, **characterized in that** the hydrocolloid is a xanthan gum.

7. A composition according to any one of the preceding claims, **characterized in that** the starch material has a solubility, at pH 7 and 20°C, of at least 30%.

8. A composition according to any one of the preceding claims, **characterized in that** the starch material is selected from the group consisting of: thinned starches, thermally modified starches, dextrins, and mixtures of two or more thereof.

9. A composition according to any one of the preceding claims, **characterized in that** the starch material is present in an amount of at least 10% by weight, based on total dry substance.

10. A composition according to any one of the preceding claims, **characterized in that** it has a Brookfield viscosity of less than 3000 mPas at 20°C, and at 100 rpm, using spindle 4.

11. A method for the production of an aqueous composition according to any one of claim 1 to 10, **characterized in that** it comprises mixing a viscosity inhibitor, a hydrocolloid, and a cold water soluble starch material with water.

12. A method according to claim 11, **characterized in that** it comprises:

    a) dissolving a viscosity inhibitor in water to produce an aqueous phase;
    b) dispersing, in said aqueous phase, a cold water soluble starch; and
    c) adding, to said aqueous phase, a hydrocolloid.

13. A binder composition comprising the aqueous composition according to any one of claims 1 to 10 and, optionally, one or more synthetic binders.

**14.** A paper coating composition, **characterized in that** it comprises the aqueous composition according to any one of claims 1 to 10, or the binder composition of claim 13, together with one or more pigments.

**15.** A paper product, **characterized in that** it is coated with the coating composition of claim 14.

**Patentansprüche**

**1.** Wässrige Zusammensetzung, umfassend eine wässrige Phase und ein in kaltem Wasser lösliches Stärkematerial, **dadurch gekennzeichnet, dass** die wässrige Lösung zumindest einen Viskositätsinhibitor und ein Hydrokolloid umfasst; und dass das Stärkematerial in der wässrigen Phase durchgehend dispergiert ist.

**2.** Zusammensetzung nach Anspruch 1, **dadurch gekennzeichnet, dass** der Viskositätsinhibitor wasserlöslich ist.

**3.** Zusammensetzung nach Anspruch 1 oder Anspruch 2, **dadurch gekennzeichnet, dass** der Viskositätsinhibitor ausgewählt ist aus Kohlenhydraten, die eine DE von zumindest 10, Polyolen, synthetischen Polymeren, synthetischen Oligomeren und Mischungen aus zweien oder mehreren davon aufweisen.

**4.** Zusammensetzung nach einem der vorherigen Ansprüche, **dadurch gekennzeichnet, dass** der Viskositätsinhibitor ein Kohlenhydrat umfasst, das ausgewählt ist aus der Gruppe bestehend aus Glukose, Glukosesirupe, Stärkehydrosaten, und Mischungen aus zweien oder mehreren davon.

**5.** Zusammensetzung nach einem der vorherigen Ansprüche, **dadurch gekennzeichnet, dass** der Viskositätsinhibitor Glycerol umfasst.

**6.** Zusammensetzung nach einem der vorherigen Ansprüche, **dadurch gekennzeichnet, dass** das Hydrokolloid ein Xanthangummi ist.

**7.** Zusammensetzung nach einem der vorherigen Ansprüche, **dadurch gekennzeichnet, dass** das Stärkematerial bei pH 7 und 20 °C eine Löslichkeit von zumindest 30 % aufweist.

**8.** Zusammensetzung nach einem der vorherigen Ansprüche, **dadurch gekennzeichnet, dass** das Stärkematerial ausgewählt ist aus der Gruppe bestehend aus: gedünnten Stärken, thermisch modifizierten Stärken, Dextrinen, und Mischungen aus zweien oder mehreren davon.

**9.** Zusammensetzung nach einem der vorherigen Ansprüche, **dadurch gekennzeichnet, dass** das Stärkematerial in einer Menge von zumindest 10 Gew.-% vorliegt, basierend auf der gesamten Trockensubstanz.

**10.** Zusammensetzung nach einem der vorherigen Ansprüche, **dadurch gekennzeichnet, dass** sie eine Brookfield-Viskosität von weniger als 3000 mPas bei 20 °C aufweist, und bei 100 Umin, unter Verwendung von Spindel 4.

**11.** Verfahren zur Herstellung einer wässrigen Zusammensetzung nach einem der Ansprüche 1 bis 10, **dadurch gekennzeichnet, dass** es Mischen eines Viskositätsinhibitors, eines Hydrokolloids, und eines in kaltem Wasser löslichen Stärkematerials mit Wasser umfasst.

**12.** Verfahren nach Anspruch 11, **dadurch gekennzeichnet, dass** es umfasst:

a) Auflösen eines Viskositätsinhibitors in Wasser, um eine wässrige Phase herzustellen;
b) Dispergieren, in der wässrigen Phase, einer in kaltem Wasser löslichen Stärke; und
c) Hinzugeben, zu der wässrigen Phase, eines Hydrokolloids.

**13.** Bindemittelzusammensetzung, umfassend die wässrige Zusammensetzung nach einem der Ansprüche 1 bis 10 und gegebenenfalls ein oder mehrere synthetische Bindemittel.

**14.** Papierbeschichtungszusammensetzung, **dadurch gekennzeichnet, dass** sie die wässrige Zusammensetzung nach einem der Ansprüche 1 bis 10, oder die Bindemittelzusammensetzung aus Anspruch 13, zusammen mit einem oder mehreren Pigmenten umfasst.

**15.** Papiererzeugnis, **dadurch gekennzeichnet, dass** es mit der Beschichtungszusammensetzung nach Anspruch 14 beschichtet ist.

**Revendications**

**1.** Composition aqueuse comprenant une phase aqueuse et un matériau d'amidon soluble dans l'eau froide, **caractérisée en ce que** la phase aqueuse comprend au moins un inhibiteur de viscosité et un hydrocolloïde ; et **en ce que** le matériau d'amidon est dispersé dans toute la phase aqueuse.

**2.** Composition selon la revendication 1, **caractérisée en ce que** l'inhibiteur de viscosité est soluble dans l'eau.

**3.** Composition selon la revendication 1 ou la revendication 2, **caractérisée en ce que** l'inhibiteur de viscosité est choisi parmi les hydrates de carbone ayant un DE d'au moins 10, les polyols, les polymères synthétiques, les oligomères synthétiques et des mélanges de deux ou plusieurs de ceux-ci.

**4.** Composition selon l'une quelconque des revendications précédentes, **caractérisée en ce que** l'inhibiteur de viscosité comprend un hydrate de carbone choisi dans le groupe constitué du glucose, des sirops de glucose, des hydrolysats d'amidon et des mélanges de deux ou plusieurs de ceux-ci.

**5.** Composition selon l'une quelconque des revendications précédentes, **caractérisée en ce que** l'inhibiteur de viscosité comprend du glycérol.

**6.** Composition selon l'une quelconque des revendications précédentes, **caractérisée en ce que** l'hydrocolloïde est une gomme xanthane.

**7.** Composition selon l'une quelconque des revendications précédentes, **caractérisée en ce que** le matériau d'amidon présente une solubilité, à pH 7 et 20°C, d'au moins 30 %.

**8.** Composition selon l'une quelconque des revendications précédentes, **caractérisée en ce que** le matériau d'amidon est choisi dans le groupe constitué par : les amidons dilués, les amidons modifiés thermiquement, les dextrines et les mélanges de deux ou plusieurs de ceux-ci.

**9.** Composition selon l'une quelconque des revendications précédentes, **caractérisée en ce que** le matériau d'amidon est présent en une quantité d'au moins 10 % en poids, par rapport à la substance sèche totale.

**10.** Composition selon l'une quelconque des revendications précédentes, **caractérisée en ce qu'**elle présente une viscosité Brookfield inférieure à 3000 mPas à 20°C et à 100 tr/min en utilisant une broche 4.

**11.** Procédé pour la production d'une composition aqueuse selon l'une quelconque des revendications 1 à 10, **caractérisé en ce qu'**il comprend le mélange d'un inhibiteur de viscosité, d'un hydrocolloïde et d'un matériau d'amidon soluble dans l'eau froide avec de l'eau.

**12.** Procédé selon la revendication 11, **caractérisé en ce qu'**il comprend :

a) dissoudre un inhibiteur de viscosité dans de l'eau pour produire une phase aqueuse ;
b) disperser, dans ladite phase aqueuse, un amidon soluble dans l'eau froide ; et
c) ajouter, à ladite phase aqueuse, un hydrocolloïde.

**13.** Composition de liant comprenant la composition aqueuse selon l'une quelconque des revendications 1 à 10 et éventuellement un ou plusieurs liants synthétiques.

**14.** Composition de revêtement de papier, **caractérisée en ce qu'**elle comprend la composition aqueuse selon l'une quelconque des revendications 1 à 10, ou la composition de liant selon la revendication 13, conjointement avec un ou plusieurs pigments.

**15.** Produit en papier, **caractérisé en ce qu'**il est revêtu de la composition de revêtement de la revendication 14.

**FIGURE 1**

**FIGURE 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13002643 A
- WO 03080929 A
- EP 1514891 A, Roquette
- WO 2010133324 A, Cargill